# EUROPEAN PATENT SPECIFICATION

(11) **EP 4 271 527 B1**
(45) Date of publication and mention of the grant of the patent: **24.09.2025**
(21) Application number: 21844029.5
(22) Date of filing: 30.12.2021
(51) Int. Cl.: B05C 5/02, B01D 67/00, B05C 3/12, B05C 9/04, H01M 4/04, H01M 50/403

(54) **DOUBLE-SIDEDLY COATING A POROUS WEB WITH A DOPE USING A WEB POSITIONING ELEMENT**
DOPPELSEITIGE BESCHICHTUNG EINER PORÖSEN BAHN MIT EINER SPINNLÖSUNG UNTER VERWENDUNG EINES BAHNPOSITIONIERUNGSELEMENTS
REVÊTEMENT DOUBLE FACE D'UNE BANDE POREUSE AVEC UN DOPANT À L'AIDE D'UN ÉLÉMENT DE POSITIONNEMENT DE BANDE

(30) Priority: 30.12.2020 EP 20217947
(43) Date of publication of application: 08.11.2023
(73) Proprietor: MMM Innovations bv, 2160 Wommelgem (BE)
(72) Inventor: DOYEN, Willy, 2160 Wommelgem (BE)
(74) Representative: Winger
(86) International application number: PCT/EP2021/087857
(87) International publication number: WO 2022/049312

(56) References cited:
- EP-A2- 0 926 749
- EP-A2- 1 579 927
- CN-U- 203 540 825
- US-A1- 2003 192 473
- US-A1- 2014 178 587

## Description

### Technical field of the invention

The present invention relates to coating apparatuses and methods for double-sidedly coating a porous web with a dope, as well as to double-sidedly coated porous webs obtainable using these apparatuses and/or methods.

### Background of the invention

lon-permeable diaphragms-also called separators-are employed in various electrochemical applications such as electrolysers, batteries and fuel cells. To support their use for long-term and in bigger dimensions, these ion-permeable diaphragms must have sufficient mechanical strength. Ion-permeable web-reinforced diaphragms have therefore been developed, in which the diaphragm is made up of a reinforcing porous web (e.g. a plain-weft-type woven fabric) coated with a dope. The current manufacturing standard therefor is based on techniques such as disclosed in EP1298740A2 and EP2296825B1.

In one embodiment of EP1298740A2, a method involves passing a dope through two opposing dies with a prescribed clearance across the path of conveyance of a porous support. The system used has a narrow clearance between the support and the die lip conveying exit ends of the support conveying exit lips from the die discharge section, and the dope supplied in a quantitative manner in the widthwise direction accumulates in a liquid pool space, allowing continuous impregnation and dispensing of the dope into the support. In this system, the thickness of the coated film can be controlled by changing the clearance between the support and the die lip conveying exit ends at the tips of the lips at the support exit end.

EP2296825B1 discloses a similar approach in which an elongated porous web is transported downwards between two impregnating heads comprising two slots (i.e. one each) which provide identical metered quantities of a dope simultaneously to both sides of said elongated porous web. A difference with EP1298740A2 is said to be that the flow rate of dope fed through the impregnating heads is controlled such that the coated wet layer thickness directly dependents upon this flow rate, rather than upon the clearance between each lower die lip and the web (or viewed alternatively: the total coating gap between the lower die lips). A meniscus is thereby formed between the end of the lower lip and the elongated porous membrane and the thickness of the provided dope layers becomes independent from said clearance.

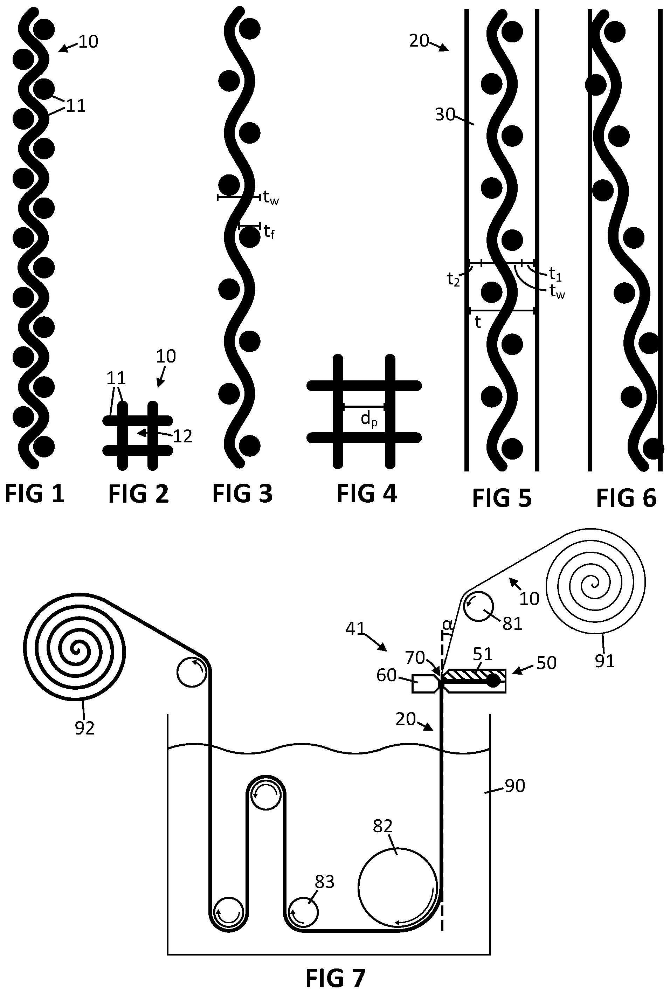

lon-permeable web-reinforced diaphragms produced as above function well in applications where the current density is low, such as classical (up to 0.2 A/cm²) and advanced (0.2 to 0.6 A/cm²) alkaline water electrolysis. However, intensified electrochemical processes (above 0.6 A/cm²) require or produce higher current densities during their operation, which typically leads to high ionic resistances and consequently high voltage penalties and heat production, hence resulting in reduced cell efficiencies. Such phenomena are for example seen in alkaline water electrolysis during attempts to increase the electrolysis rates (e.g. to increase the rate of gas production) by letting this technology operate under "proton exchange membrane (PEM)-like" current densities (e.g. in the order of 0.6-2.5 A/cm²).The latter is for instance evidenced by Kraglund et al. (KRAGLUND, Mikkel Rykær, et al. Ion-solvating membranes as a new approach towards high rate alkaline electrolyzers. Energy & Environmental Science, 2019, 12.11: 3313-3318.). Particularly Fig. 3 therein shows that the cell potential for commercial Zirfon^{™} PERL diaphragms rises rapidly with increasing current density. Consequently, when trying to increase the H₂ generation by raising the current density, one quickly reaches a practical limit for the electrolysis potential (e.g. about 1.8-1.9 V) beyond which the process loses efficiency and economical relevance. Likewise, similar phenomena are seen in other electrochemical cells upon e.g. fast (dis)charging of alkaline and also other (e.g. Li-on) batteries, where the ionic resistance dominates the achievable speed of (dis)charging or cell operation.

It is therefore desirable to produce ion-permeable diaphragms having substantially lower ionic resistance, allowing them to maintain high efficiency also under intensified usage at higher current densities. The main options to achieve this are to make the diaphragms considerably thinner and/or more porous. Nevertheless, this must be balanced with the need to maintain sufficient mechanical strength (cf. supra), so that the web-reinforcing as such should be maintained. Notwithstanding the latter, there is still room to reduce the thickness and/or increase the open area of the porous web.

However, the extent to which this is possible is limited when using the state-of-the-art manufacturing methods for coating the porous web with dope. Indeed, in practice it is difficult to impossible to manufacture decent ion-permeable web-reinforced diaphragms when the open area of the porous web is higher than 60% (or even 55%). In this respect, EP2296825B1 mentions that the elongated porous web may be between 30 and 70%, with an open area in the range of 40 to 60% being particularly preferred. However, the listed examples of suitable fabrics are notably limited to fabrics with an open area between 38 and 58%; conforming well with the value of 55-60% (cf. supra) found in practice, above which manufacturing good ion-permeable web-reinforced diaphragms becomes exceedingly challenging. Similar issues arise when trying to use porous webs with a thickness significantly below 200 µm.

The overall ionic resistance of a diaphragm in a particular system also depends on the conductivity of the electrolyte used in said system. This conductivity can typically be increased by increasing the concentration and/or temperature of the electrolyte solution (e.g. an alkaline or acid solution). However, the materials (e.g. binders and fillers) making up the diaphragm generally have a limited (electro)chemical stability in such concentrated electrolyte solutions, especially at elevated temperatures. Another option-but also an ongoing challenge in the art-to lower the overall ionic resistance of a diaphragm in a system is therefore to enable its use in such concentrated electrolyte solutions and at such higher temperatures.

Another known problem with the state-of-the-art ion-permeable web-reinforced diaphragms (e.g. Zirfon^{™} PERL diaphragms) is that they suffer from drop-out of certain fillers-especially the (fine) granular fillers, such as the commonly used ZrO₂ filler-in the coating. These dropped out fillers then progressively build up over time in the systems (e.g. an electrolysis system) in which the ion-permeable web-reinforced diaphragms are integrated, thereby causing various issues while reducing the lifetime of the diaphragms.

EP1579927A2 discloses a coating apparatus for coating a web with a coating solution to form a coating layer, in which the slot die can be held with high accuracy and the clearance accuracy between the lips and a web can be increased. More specifically, the coating apparatus comprises a mounting obtained by grinding an integrally moulded material; and a die supported by said mounting, said coating solution being discharged between lips of said die.

US2003192473A1 discloses a contact die for dispensing of flowable material on a substrate. The contact die includes at least one die block including a first internal passage. A die lip portion is disposed on the die block having a lateral dimension. A first plurality of orifices is disposed through the die lip portion proximate to each other and in communication with the internal passage to dispense flowable material as a single strip on the substrate. A first edge is disposed on one lateral side of the first plurality of orifices to direct the flowable material.

US2014178587A1 discloses a method for manufacturing a coated material containing a string-shaped filler using a coating device which applies a coating fluid by forming a coating fluid bead in a clearance between a running web wound on a backup roller and a coating head tip. The method comprises at least an applying step of applying to the web the coating fluid containing a large number of metal nanowires and a drying step of drying a coating layer that has been applied, wherein the clearance is set so as to satisfy h<d≤3h in the applying step, where h indicates the wet film thickness of the coating fluid and d indicates the clearance.

CN203540825U discloses a double-faced squeezing and coating device suitable for a micropore substrate. The double-faced squeezing and coating device suitable for the micropore substrate comprises a drawing system, a first squeezing and coating head and a second squeezing and coating head, wherein the first squeezing and coating head is arranged on one side of the micropore substrate and has no contact with the micropore substrate; the second squeezing and coating head is arranged on the other side of the micropore substrate; a lower lip of the second squeezing and coating head is in contact with the micropore substrate in a linear or face contact manner; the second squeezing and coating head is used for intermittently coating slurry on the substrate in a direction crossed with the micropore substrate; the first squeezing and coating head and the second squeezing and coating head are assorted close to the position relative to the micropore substrate; the first squeezing and coating head is used for coating the slurry on the lower lip of the second squeezing and coating head and the part in linear contact or face contact with the micropore substrate. The double-faced squeezing and coating device for the micropore substrate can be used for coating both faces of the micropore substrate with the same coating viscosity; no slurry remains on the coating roller; and the substrate is prevented from being punctured by a dry and hard coating.

There is thus still a need in the art for better ways to double-sidedly coat a porous web with a dope.

### Summary of the invention

It is an object of the present invention to provide coating apparatuses for double-sidedly coating a porous web. It is a further object of the present invention to provide methods, uses and products associated therewith. This objective is accomplished by apparatuses, methods, uses and products according to the present invention.

It is an advantage of embodiments of the present invention that both sides of the porous web can be coated with a substantially constant coating thickness. It is a further advantage of embodiments of the present invention that a constant total coating thickness can be realized.

It is an advantage of embodiments of the present invention that the position of one side of the porous web can be very well controlled and maintained. It is a further advantage of embodiments of the present invention that one side can be coated with a substantially constant (and ensured) coating thickness, while any thickness variations inherent to the porous web can be absorbed at the other side.

It is an advantage of embodiments of the present invention that it is particularly well suited for coating porous webs with a relatively low rigidity-and thus high flexibility-, such as those with a high to very high open area (e.g. above 60%, or above 70% or 80%) and/or thin porous web thickness (e.g. below 200 µm, below 150 µm, or below 100 µm).

It is an advantage of embodiments of the present invention that some of the coated porous webs (e.g. those comprising lobed filaments, cf. infra) envisioned for use therein can have a relatively high dimensional stability even while having a high to very high open area and/or a thin thickness.

It is an advantage of embodiments of the present invention that only a single slot-die coating head is required. It is a further advantage of embodiments of the present invention that this obviates the need to precisely balance two dope flows against one another, thereby making the coating apparatus easier to operate. It is yet a further advantage of embodiments of the present invention that the coating apparatus is less expensive to build and maintain.

It is an advantage of embodiments of the present invention that ion-permeable web-reinforced diaphragms with a low to very low ionic resistance can be manufactured. It is a further advantage of embodiments of the present invention that such ion-permeable web-reinforced diaphragms are particularly beneficial when used in intensified electrochemical processes (e.g. intensified alkaline water electrolysis, Li-ion batteries, metal-air batteries, flow batteries, ...)

It is an advantage of embodiments of the present invention that the total coating thickness can be equal to or lower than the slit width.

It is an advantage of embodiments of the present invention that they can be realized in relatively straightforward and economical fashion.

As noted in the background section, the state of the art manufacturing methods for coating a porous web with a dope yield poorly performing ion-permeable web-reinforced diaphragms when the porous web has a high to very high open area (e.g. above 60%, and increasingly so for higher values) or a thin porous web thickness. This can be rationalized by realizing that both a high open area and thin thickness increase the flexibility of the porous web. In this respect, FIG 1 and FIG 2 schematically depict a porous web with a lower open area, as compared to FIG 3 and FIG 4 which depict a porous web with the same filament but a higher open area. As can be seen,-for the same filament type-porous webs with a higher open area are less tightly woven, with a lower number of filaments per unit area, thereby indeed resulting in a lower rigidity-and thus higher flexibility-compared to low open area porous webs. As also seen in FIG 1 and FIG 3, the porous web thickness is typically about twice the filament diameter. The main way to reduce the porous web thickness is therefore to reduce the filament diameter. However, thinner filaments are typically inherently less rigid compared to thicker filaments of the same material. Porous webs made with such thinner filaments are consequently indeed also more flexible.

In systems as described in EP1298740A2 and EP2296825B1, the porous web is transported between the two slot-die coating heads while the points where the porous web contacts a supporting structure (e.g. a roller) are relatively far removed from the slot-die coating heads. The porous web is therefore relatively free to move/displace in the direction between the two slot openings (i.e. perpendicular to the transport direction and parallel to the porous web thickness). As such, rather than coating each side of the porous web with a substantially constant coating thickness (as shown in FIG 5), the total coating thickness may be kept relatively constant but the local coating thickness at each side varies along the coated web length (as shown in FIG 6, which may include the porous web locally sticking out off the coating). These variations in local coating thickness can e.g. lower the bubble-point in the produced ion-permeable web-reinforced diaphragms. A higher bubble-point results in a better gas separation (and thus better gas quality) on both sides of the diaphragm; and thus-by contrast-a lower bubble-point leads to more gas contamination. Both EP1298740A2 and EP2296825B1 rely to some extent on symmetrically supplying the dope to have a self-centring effect on the porous web, but since the dope can easily penetrate the porous web when the open area thereof is high to very high, this 'self-centring' effect increasingly fails for high to very high open area porous webs. This is also related to the viscosity of the dope and, accordingly, similar issues arise when using thinner, less viscous dopes (e.g. 100 mPa.s or lower). Indeed, such dopes can more easily penetrate the porous web-even when the open area is not particularly high-and thereby exert insufficient pressure on the porous web to produce a significant self-centring effect.

EP2296825B1 further mentions that the distance between the lower slot faces of the impregnating apparatus may be set greater than that between the upper slot faces, so that the smaller gap between the upper slot faces can serve to restrain extreme movement of the elongated porous web and help to centre it. By doing so, it was found that waviness and curl in the produced separator can be reduced. However, while this may suffice to reduce excessive movement/displacement that results in such asymmetry that it causes the ion-permeable web-reinforced diaphragm itself to bend (e.g. wave or curl), it does so insufficiently to thoroughly minimize the more subtle variations that nevertheless cause imperfections in the coating (e.g. negatively impacting the 'bubble-point' of separator). Indeed, such an approach cannot fully centre the porous web, because the porous web itself typically has a certain thickness variation (e.g. 5 to 10%). Setting the gap between the upper slot faces too small therefore obstructs the porous web when it is transported between the impregnating heads, which can cause the porous web to bunch up and in extreme cases even tear or rip and/or congest the impregnating apparatus. However, setting the gap sufficiently wide means that there will always be a minimum of freedom of displacement for the porous web to move.

In view of the above, the present inventor conceived new configurations using which the porous web can be steadied against a web positioning element closely or immediately before being coated. The web positioning element advantageously ensures that one side of the porous web is constantly at the same position, so that at least the coating on that single side will have a substantially constant (ensured) thickness; while any thickness variation of the porous web (cf. supra) is absorbed at the other side through a correspondingly higher or lower coating thickness (without obstructing the downward transport of the porous web). This is advantageous in that the coating on one side of an ion-permeable web-reinforced diaphragm has in practical applications often a dominant effect on the characteristics of the diaphragm as a whole. Ensuring a constant thickness on that side therefore has a positive effect to these characteristics.

Moreover, the new configuration uses only one slot-die coating head, which results in a coating apparatus that is not only easier to operate through not needing to balance the two dope flows against one another, but also less expensive to build and maintain through omitting one slot-die coating head (e.g. reducing the amount of 'scrap') and accompanying peripheral structures (e.g. dope supply) and relaxing the level of control needed over the dope flow.

The present coating apparatus can be configured so that the web positioning element is on either side thereof (i.e. at the side of the slot-die coating head or of the counter element); though typically not both, as this could cause obstruction as discussed above. As such, two main configurations (herein respectively referred to as the 'first' and 'second' main configuration) can be used to realize the steadying of the porous web.

In a first aspect, the present invention relates to a coating apparatus for double-sidedly coating a porous web with a dope, comprising: (i) a slot-die coating head comprising an upper lip, a lower lip and a slot between the upper lip and the lower lip, (ii) a counter element arranged opposite the lower lip across a reference plane, (iii) a slit defined between the lower lip and the counter element for passing a porous web therebetween, the slot opening up towards the slit, and (iv) a web positioning element; wherein the web positioning element is the upper lip of the slot-die coating head, the upper lip protruding up to the reference plane so that there is an offset between the upper lip and the lower lip, or a spacing structure on the counter element, the spacing structure protruding up to the reference plane so that there is an offset between the spacing structure and the counter element.

In a second aspect, the present invention relates to a method for double-sidedly coating a porous web with a dope using a coating apparatus according to any embodiment of the first aspect, comprising: (a) passing a porous web through the slit while steadying said porous web against the web positioning element, and (b) providing the dope through the slot of the slot-die coating head into the slit, thereby coating a first side of the porous web facing the slot, and coating an opposite second side of the porous web through said porous web.

In a third aspect, the present invention relates to a use of a web positioning element in a coating apparatus according to any embodiment of the first aspect for steadying a porous web thereagainst.

In a fourth aspect, the present invention relates to a double-sidedly coated porous web obtainable by the method according to any embodiment of the second aspect.

In a fifth aspect, the present invention relates to a double-sidedly coated porous web, having on one side a coating thickness defined by an average and a standard deviation, the standard deviation being 10 µm or less, preferably 5 µm or less, yet more preferably 2.5 µm or less.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG 1 schematically depicts a side view of a low open area porous web.
FIG 2 schematically depicts a front view of the motive of a low open area porous web in accordance with FIG 1.
FIG 3 schematically depicts a side view of a high open area porous web.
FIG 4 schematically depicts a front view of the motive of a high open area porous web in accordance with FIG 3.
FIG 5 schematically depicts a double-sidedly coated porous web having an ideally constant coating thickness on both sides.
FIG 6 schematically depicts a double-sidedly coated porous web having a coating thickness which varies along the length of each sides, as is typically obtained using prior art methods.
FIG 7 schematically depicts a roll-to-roll setup for forming a double-sidedly coated porous web in accordance with the present invention.
FIG 8 schematically depicts the roll-to-roll setup of FIG 7 with optional additional elements for differentiating the vapour contact on both sides of the coated porous web.
FIG 9 schematically depicts an alternative setup to that of FIG 6 and FIG 7.
FIG 10 schematically depicts a close-up view of a first type of coating apparatus ('first main configuration') in accordance with the present invention, in which the web positioning element is provided by a protruding upper lip of the slot-die coating head.
FIG 11 schematically depicts a close-up view of a second type of coating apparatus ('second main configuration') in accordance with the present invention, in which the web positioning element is provided by a protruding spacing structure on the counter element.
FIG 12-FIG 15 schematically depict a few different cross-sectional profiles of lobed filaments, more specifically dogbone (FIG 12), trilobal (FIG 13), quadrilobal (FIG 14) and hexalobal (FIG 15) cross-sectional profiles.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, a porous web-when fully outspread (e.g. not curved, rolled or bunched up)-typically has three perpendicular dimensions of which one-referred to as the 'thickness'-is considerably smaller than the other two. Of the remaining two dimensions, the direction parallel to the transportation direction through the slit is herein referred to as the 'length' of the porous web. The third direction is then referred to as the 'width' of the porous web.

As used herein, and unless otherwise specified, the 'open area' of a porous web is the fraction of the porous area (i.e. the combined area of the pores) to the total area of the porous web. For example, on a view such as depicted in FIG 2 and FIG 4, the open area is the area of open space/pores (12; white) between the filaments (11; black) over the total area (white+black). The open area of a porous web can be determined experimentally for instance by taking a microscopic image of the porous web akin to the schematic views shown in FIG 2 and FIG 4 and determining therefrom-e.g. for a selected (unit) area-the area of open space/pores and the total area. The open area may for example be expressed as a percentage (%), a decimal number (between 0 and 1) or a fraction.

As used herein, and unless otherwise specified, a 'reference plane' is a plane that can be used as a reference with respect to which the position of components of the coating apparatus and of the porous web can be related. More specifically, when used in a method in accordance with the second aspect of the present invention, the side of the porous web facing the web positioning element is at the height of the web positioning element aligned with the reference plane. This is realized because the web positioning element-regardless of whether the web positioning element is the upper lip of the slot-die coating head or is the spacing structure-protrudes up to the reference plane and because the porous web is steadied against the web positioning element, thereby in turn effectively aligning it with the reference plane (cf. infra).

As used herein, and unless otherwise specified, a 'counter element' is an element arranged (at a distance corresponding to the slit width w; and thus a distance w-d from the reference plane) opposite the lower lip of the slot-die coating head (across the reference plane), thereby defining the slit therebetween. In operation, the counter element does not supply dope (in contrast e.g. to the second slot-die coating heads in EP1298740A2 and EP2296825B1), but-through its placement with respect to the slit and the lower lip-limits the amount of coating material (e.g. dope) which is coated on the second side (i.e. the side facing away from the slot) of the object to be coated (e.g. the porous web). The latter is typically realized by removing or preventing excess coating material from/on the second side. To this effect, the counter element could for instance be a doctor blade, a roller (e.g. a drum) or another element useable therefor; preferably a doctor blade. Doctor blades are well-known in the art and are routinely used in various coating and printing techniques, such as doctor blading, flexographic printing and gravure printing. They are tools-typically arranged at an offset from the object to be coated-used for removing or preventing excess coating material from/on the object. Within the present invention, the doctor blade is typically a passive element; i.e. it is stationary with respect to e.g. the lower lip (in contrast to a roller which typically rotates in operation).

In a first aspect, the present invention relates to a coating apparatus for double-sidedly coating a porous web with a dope, comprising: (i) a slot-die coating head comprising an upper lip, a lower lip and a slot between the upper lip and the lower lip, (ii) a counter element arranged opposite the lower lip across a reference plane, (iii) a slit defined between the lower lip and the counter element for passing a porous web therebetween, the slot opening up towards the slit, and (iv) a web positioning element; wherein the web positioning element is the upper lip of the slot-die coating head (herein referred also to as the 'first main configuration'), the upper lip protruding up to the reference plane so that there is an offset between the upper lip and the lower lip, or a spacing structure on the counter element (herein referred also to as the 'second main configuration'), the spacing structure protruding up to the reference plane so that there is an offset between the spacing structure and the counter element.

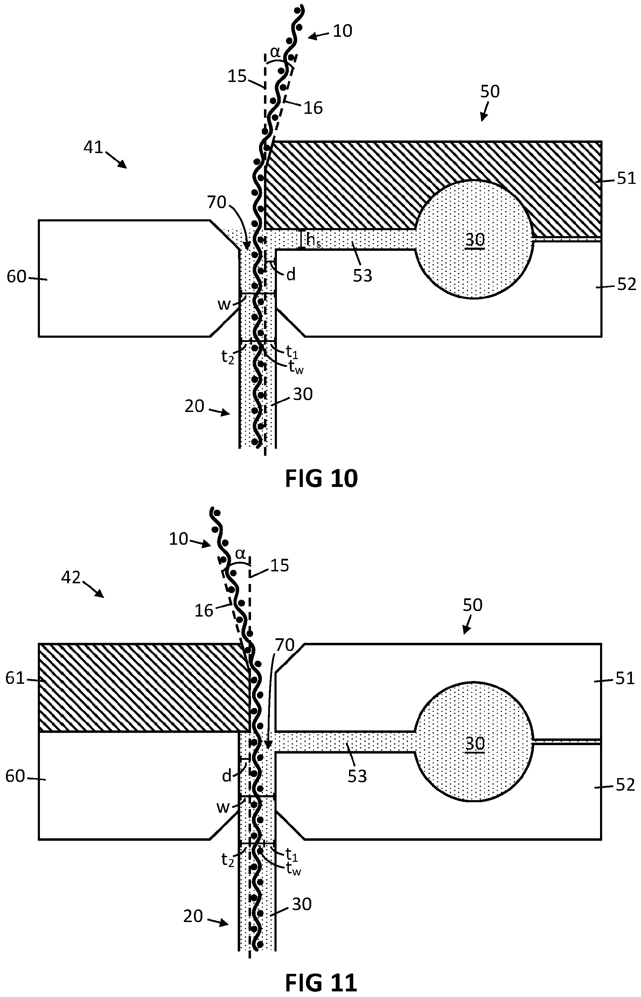

An illustrative coating apparatus 41 in accordance with the first main configuration is schematically depicted in FIG 10, showing slot-die coating head 50-with upper lip 51, lower lip 52 and slot 53-and counter element 60 (here depicted as a doctor blade) arranged opposite lower lip 52 across reference plane 15. Slit 70 is defined between lower lip 52 and counter element 60, for passing porous web 10 therebetween. Slot 53 opens up towards slit 70, so dope 30 from slot-die coating head 50 can be provided through slot 53 into slit 70. In FIG 10, the web positioning element is realized by upper lip 51, which protrudes up to reference plane 15 so as to create an offset d with lower lip 52. The first main configuration may be preferred over the second, e.g. because the upper lip doubles up as the web-positioning element, thereby requiring less elements.

Conversely, an illustrative coating apparatus 42 in accordance with the second main configuration is schematically depicted in FIG 11. Coating apparatus 42 is similar to coating apparatus 41, but the web positioning element is realized by spacing structure 61 on the counter element-i.e. opposite upper lip 51-, which in turn protrudes up to reference plane 15 so as to create an offset d with counter element 60.

In embodiments, only one of the protruding upper lip or protruding spacing structure may be present. In other words, the web positioning element may be present on one side only.

In embodiments, the coating apparatus-or a system comprising the coating apparatus-may comprise one or more guiding elements (e.g. one or more rollers, such as spreader rollers) for guiding the porous web as it is transported (e.g. through the slit). In embodiments, one or more of the guiding elements may contribute to-or even drive-the transportation of the porous web. In embodiments, the coating apparatus may comprise at least a guiding element before (e.g. above) the web positioning element. In alternative or complementary embodiments, the coating apparatus may comprise at least a guiding element after (e.g. below) the slot-die coating head's lower lip. In preferred embodiments, the coating apparatus may comprise the (first) guiding element before the web positioning element and the (second) guiding element after the slot-die coating head's lower lip.

In preferred embodiments, one or more of the guiding elements may be spreader roller(s) for spreading the porous web. In embodiments, spreading the porous web may comprise spreading the porous web at least in the porous web's width direction, preferably in both the porous web's width and length directions. Spreading the porous web may be (fully) outspreading the porous web; preferably without substantially (over)stretching it (i.e. forcibly extending or elongating it).

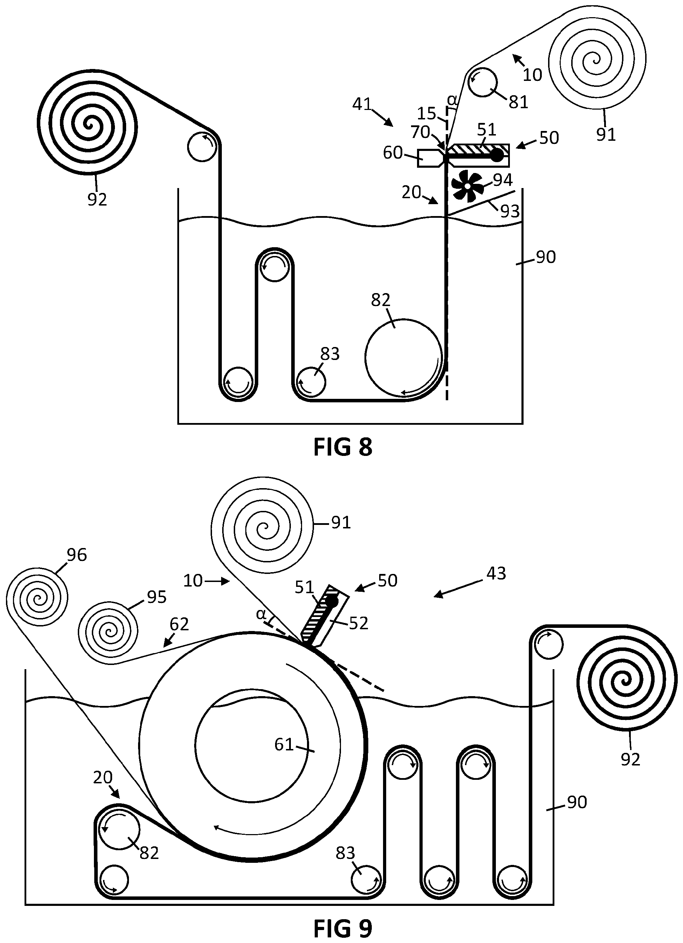

In embodiments, the coating apparatus-or a system comprising the coating apparatus-may be configured to-in operation-differentially expose both sides of the coated porous web to a non-solvent vapour before solidification of the dope (e.g. between the slit and a solidification means, such as a non-solvent precipitation bath). Indeed, the degree of exposure (which is function of both the intensity-e.g. the partial pressure-and the duration of the exposure) of the coated dope to a non-solvent vapour before solidification directly affects the size of the pores which are formed in the coating, with a higher exposure resulting in larger pores. By differentially exposing both sides to a different degree (e.g. by ensuring a different partial pressure and/or a different exposure time on both sides), one can thus advantageously form a double-sidedly coated porous web with different pore sizes on both sides. For example, such a double-sidedly coated porous web may have small pores (e.g. about 0.05-0.2 µm) on one side-thereby advantageously ensuring a high bubble-point-and larger pores (e.g. in the order of 5 to 10 times larger- or about 0.25-2 µm-; though preferably also accounting for the size of the (fine) granular fillers in the coating, cf. infra) on the opposite side-which result in a lower ionic resistance compared to small pores on both sides. The combination of small and large pores on different sides thus very advantageously results in a double-sidedly coated porous web with a beneficially high bubble-point and simultaneously a low overall ionic resistance. In this respect, differentially exposing both sides of the coated porous web to the non-solvent vapour may for example be achieved by one or more of (i) differentially covering an underlying non-solvent (thereby differentially shielding the sides from vapour evaporating from the non-solvent; e.g. as depicted in FIG 8 in the form of cover 93 on one side of the porous web), (ii) differentially blowing 'dry' (i.e. containing no or less non-solvent vapour) air near both sides (e.g. as depicted in FIG 8 in the form of fan 9 blow dry air near one side), (iii) differentially blowing 'wet' (i.e. containing non-solvent vapour) air near both sides (e.g. by a fan blowing air near one side), (iv) differentially removing non-solvent vapour on both sides (e.g. by a pump sucking away non-solvent vapour near one side), etc.

As described in more detail below,-in operation-the porous web may come into contact with the web positioning element along an incidence plane and the incidence plane may be-with respect to the reference plane-tilted towards the web positioning element. In embodiments, the incidence plane may be tilted at an angle (α) of at least 5°, preferably at least 10°, more preferably at least 15°, yet more preferably at least 20°, most preferably at least 25°. In embodiments, the coating apparatus-e.g. more particularly the web positioning element-may be configured therefor. For example, the web positioning element (e.g. a position thereof) may be configured with respect to a first/upper guiding element (i.e. before the web positioning element) such that the porous web comes into contact with the web positioning element along the tilted incidence plane.

In embodiments, the offset may measure between 1 µm and 1000 µm, preferably between 2 µm and 500 µm, more preferably between 3 µm and 250 µm, yet more preferably between 4 µm and 125 µm, such as between 5 µm and 50 µm. In embodiments, the offset may be adjustable (e.g. settable in a controlled manner to a selected/predetermined value). A coating apparatus with an adjustable offset can advantageously be straightforwardly adapted to accommodate porous webs with varying thicknesses.

In embodiments, the spacing structure may be affixed to or integrally connected with the counter element.

In embodiments, the slot-die coating head may be physically coupled with the counter element. Doing so can advantageously aid to keep the offset constant during the coating process. Note that the offset can nevertheless be adjustable (cf. supra); i.e. the slot-die coating head may be physically coupled with the counter element in such a way that the offset can be adjusted (when this is desired). In some embodiments, the slot-die coating head may be directly connected with the counter element. For example, the slot-die coating head may be affixed to or integrally connected with the counter element. In other embodiments, the slot-die coating head may be indirectly coupled with the counter element through another element. For example, the slot-die coating head and the counter element may each be affixed to or integrally connected with a common base.

In embodiments, any feature of any embodiment of the first aspect may independently be as correspondingly described for any embodiment of any of the other aspects.

In a second aspect, the present invention relates to a method for double-sidedly coating a porous web with a dope using a coating apparatus according to any embodiment of the first aspect, comprising: (a) passing a porous web through the slit while steadying said porous web against the web positioning element, and (b) providing the dope through the slot of the slot-die coating head into the slit, thereby coating a first side of the porous web facing the slot, and coating an opposite second side of the porous web through said porous web.

In contrast e.g. to EP1298740A2 and EP2296825B1, only a single slot-die coating head is herein needed, which delivers dope through the slot on one side of the slit. Use is then made of the porosity of the porous web (i.e. the open area of the porous web) to send a portion of the dope-through the pores-to the other side, thereby nevertheless allowing to coat both sides of the porous web.

By steadying the porous web against the web positioning element (and more specifically: against the portion of the web positioning element which protrudes up to the reference plane), the position of the side of the porous web facing the web positioning element at the height of the web positioning element is aligned with the reference plane. From there, the porous web can be transported downward while keeping the side of the porous web facing the web positioning element substantially steady. Preferably, said transportation may be parallel with the reference plane, so that the porous web's side facing the web positioning element remains aligned with said reference plane. In embodiments, the porous web may be passed through the slit substantially vertically downward. This can for example be realized through accordingly configuring the web positioning element with respect to a lowerly positioned guiding element (e.g. as shown in FIG 7 for web positioning element 51 and roller 82; cf. supra). Accordingly, the reference plane may likewise be oriented substantially vertically downward; or-in other words-a normal of the reference plan may be oriented substantially horizontally.

In embodiments, steadying the porous web against the web positioning element may comprise drawing the porous web against the web positioning element. For example, the porous web may be drawn flat against the web positioning element. Steadying-and drawing-the porous web against the web positioning element may typically be achieved by suitably configuring the web positioning element (e.g. a position thereof) with respect to the porous web. For example, the coating apparatus may comprise a first guiding element (e.g. a first roller, such as a first spreader roller; cf. supra) positioned before the web positioning element and a second guiding element (e.g. a second roller, such as a second spreader roller) positioned after the slit; and the web positioning element may be shifted with respect to the shortest path for the porous web between the first and second guiding element, such that the porous web is drawn against the web positioning element.

This is for example schematically depicted for an illustrative roll-to-roll process in FIG 7, showing a porous web 10 rolling off first roll 91 over a small spreader roller 81, through coating apparatus 41; and then after coating-through a non-solvent bath 90, in order to solidify the dope into the eventual coating-over large roller 82-which has a somewhat larger diameter so as to distribute the forces over a larger surface and thus lower the pressure on the partially-solidified dope-and then a series of further rollers 83 rolled onto second roll 92. As depicted, the coating apparatus 41 is here shifted to the right (i.e. with respect to the shortest path for the porous web 10 between the rollers 81 and 82), so that the porous web 10 running between rollers 81 and 82 is drawn against the web positioning element 51. More specifically, the depicted shift is such that the horizontal distance between (the left side of) the web positioning element-and thus the reference plane 15-and (the right side of) the large roller 82 is about equal to the sum (t_{w} + t₂) of the porous web thickness (t_{w}) and the (dry) coating thickness on the second side (t₂); so that the porous web 10 runs substantially vertically downward from the web positioning element 51 to the large roller 82.

In embodiments, the porous web may thus come into contact with the web positioning element along an incidence plane (i.e. 'plane of incidence') and the incidence plane may be-with respect to the reference plane-tilted towards the web positioning element. In embodiments, the incidence plane may be tilted (i.e. towards the web positioning element) at an angle (α) of at least 5°, preferably at least 10°, more preferably at least 15°, yet more preferably at least 20°, most preferably at least 25°. A tilted incidence plane advantageously facilitates steadying the porous web against the web positioning element.

Moreover, due to how the web positioning element, lower lip and counter element are configured with respect to one another, the slit-where the coating occurs-automatically closely follows the web positioning element. For example, a height distance between a bottom of the web positioning element and a top of the slit may be smaller than 150% of the slot height (hₛ), preferably smaller than 120%, more preferably smaller than 110%, still more preferably equal to or smaller than 105%, most preferably equal to or smaller than 100%. A typical slot height may for example be in order of about 0.1 to 5 mm, such as 0.2 to 2 mm. By advantageously coating the web positioning element close to where has been steadied, there is minimal opportunity for the porous web to intermediately still deviate from its desired ideal path; in contrast e.g. to EP1298740A2 and EP2296825B1.

FIG 8 shows the same setup as in FIG 7, but with an optional additional cover 93 and/or dry-air fan 94 to ensure that both sides of the coated web are differentially exposed to the non-solvent vapour before solidification (cf. supra), thereby yielding a coated web with small pores on one side (in FIG 8 the side facing towards the web positioning element) and larger pores on the opposite side (in FIG 8 the side facing away from the web positioning element). Having the small pores on the side facing towards the web positioning element may in embodiments be preferred as this is also the side with the best coating thickness control (through the use of the web positioning element; cf. infra). Indeed, when the coating is (locally) insufficiently thick over the side with the small pores, this has a considerable negative impact on the bubble-point. As such, the bubble-point tends to be more prone to thickness variations than the ionic resistance, so that it is typically more beneficial to establish a good bubble-point by having the small pores on the side with low thickness variation. Nevertheless, it will be clear that the reverse is also possible and could also prove fruitful.

FIG 9 schematically depicts a possible variation of the first main configuration, showing a porous web 10 rolling off first roll 91 through coating apparatus 43; and then through non-solvent bath 90, over a series of further rollers 82 and 83 and eventually rolling double-sidedly coated web 20 onto second roll 92. Instead of a doctor blade, coating apparatus 42 uses a large roller 61 (e.g. a drum, for instance with a diameter of about 0.25-3 m) in combination with hydrophobic sheet 62 (e.g. a silicone sheet, with the silicone layer directed towards the applied dope) which is rolled of roll 95 and rolled onto roll 96. Like in other embodiments of the first main aspect, upper lip 51 of slot-die coating head 50 protrudes up to reference plane 15 (so as to create an offset with lower lip 52) to form a web positioning element against which porous web 10 is steadied. In contrast to also having an offset with respect to the counter element (doctor blade) though-as e.g. depicted in FIG 10 and FIG 11-, the coated web 20 is here not freestanding but runs along roller 61 and thus touches hydrophobic sheet 62. Nevertheless, it was found that if the viscosity of the dope is sufficiently low, the dope passes through the porous web and still coats the second side (i.e. facing away from the slot) in such a way that a good coating on both sides is achieved after solidification. The role of the hydrophobic sheet 62 is then to ensure that the web that is coated does not prematurely come into contact with the non-solvent (e.g. water). Indeed, roller 61 is partially submerged in the non-solvent bath and its surface is thus typically wetted with the non-solvent. Note though that the solution as depicted in FIG 9 of rolling (dry) hydrophobic sheet 62 of roll 95 and after wetting onto roll 96 is but one possibility. Indeed one can also make use of a drying system-in the zone after it leaves the non-solvent bath and before the web 10 or 20 comes into contact with it-to either directly dry roller 61 (in which case hydrophobic sheet 62 and rollers 95-96 can be dispensed with) or to dry the hydrophobic sheet 62 (in which case it can be provided in an continuous cycle, rather than being rolled off and on rollers 95-96).

The dope typically initially requires a certain minimum time (e.g. in the order of about 20-30 sec, though this depends also on the coating thickness) in contact with the non-solvent before it has sufficiently solidified for the coated web to be safely transferred on and off the further rollers without damaging the coating. As such, there is an upper bound to the coating speed of the system which is determined by the distance available in the non-solvent for that initial solidification. In a setup as depicted in FIG 7 and FIG 8, this space is limited by the depth of the bath, because increasing the distance from the surface of the non-solvent to the first (larger) roller 82 is requires further lowering said roller 82. However, since increasingly deep baths (e.g. 10-15 m deep) become very impractical, there arises a practical limit on the achievable coating speed. In this respect, using a roller as counter element-as e.g. illustrated in FIG 9-advantageously allows to redirect the coated porous web in the non-solvent even while the dope is still wet and undergoing initial solidification, thereby more optimally using the space provided by the non-porous bath through effectively engaging also its horizontal dimension therefor. Depending then on the diameter of the roller-and the portion of its circumference over which the coated porous web is in contact with the non-solvent-high to very high coating speeds can be achieved (e.g. from about 1-3 m/min in a setup as in FIG 7 and FIG 8 to about 5-50 m/min, preferably at least 15-25 m/min), which is very useful to facilitate mass production of the doubly-sidedly coated porous webs. In embodiments, the roller may therefore have a diameter of at least 1 m, preferably at least 3 m, yet more preferably at least 5 m.

In line with the above, the second main configuration could also be adapted to use a roller (rather than e.g. a doctor blade), which could then double up as web positioning element. However, given that the coated web runs along the roller, there is then typically no offset d at the side of the web positioning element; in which case this adaptation falls outside the scope of the present invention.

In embodiments, the porous web-which could alternatively be referred to as a 'porous support'-may be a woven or non-woven fabric, preferably a woven fabric. Compared to what is currently achievable for woven fabrics, non-woven fabrics tend to have lower total porosity (open area) and to give less mechanical strength and/or support; making them for some applications less preferred. In embodiments, the porous web may be made of monofilaments, multifilaments or a combination thereof; preferably monofilaments. Monofilament porous webs advantageously tend to be mechanically stronger and stiffer.

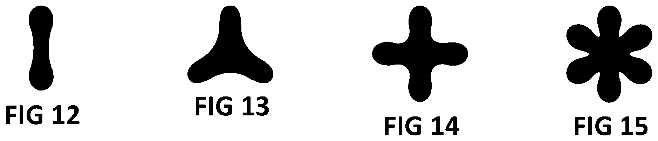

A variety of cross-sectional profiles may be used for the filaments making up the porous web. For example, the cross-sectional profile may be circular (round), oval, lobed, octagonal, hexagonal, pentagonal, square, rectangular, triangular or irregular. The cross-sectional profile may typically impart certain properties unto the filament and/or the porous web comprising them and may thus advantageously be selected in function thereof. In preferred embodiments, the porous web may comprise (e.g. be made from) filaments having a lobed (i.e. having two or more lobes) cross-sectional profile. In embodiments, the lobed cross-sectional profile may be a dogboned/dumbbell (as e.g. depicted in FIG 12), trilobal (as e.g. depicted in FIG 13), quadrilobal (as e.g. depicted in FIG 14), crosslobal, multilobal (e.g. hexalobal, as e.g. depicted in FIG 15), etc. cross-sectional profile; preferably a triblobal or quadrilobal cross-sectional profile. Filaments with a lobed cross-sectional profile can advantageously easily be fixed (e.g. with a thermofixation step) to make porous webs with very high dimensional stability (i.e. low flexibility) and which thus display high resistance toward shrinkage (e.g. shrinkage upon solidifying the dope during diaphragm formation). Porous webs with a high open area and/or which are thin and have typically inherently less resistance against said shrinkage. The use of filaments with a lobed cross-sectional profile is therefore particularly advantageous in that context, in turn allowing to make e.g. (very) thin diaphragms with very low ionic resistance.

In embodiments, the porous web may have an open area (or total porosity) of between 55 and 95%, preferably more than 60%, more preferably more than 70%, yet more preferably more than 80%, most preferably more than 90%.

In embodiments, the porous web may have a thickness (t_{w}) of between 10 and 750 µm, preferably between 35 and 500 µm, more preferably between 50 and 150 µm.

In embodiments, the porous web may have a filament thickness (t_{f})-e.g. filament diameter-of between 5 and 400 µm, preferably between 10 and 300 µm, more preferably between 20 and 250 µm, yet more preferably between 30 and 200 µm. The filaments from which the porous web is formed may typically have a circular cross-section, so that one may typically speak of the 'filament diameter'. However, where the filaments have a different cross-sectional profile (cf. supra), it can be more appropriate to speak of the 'filament thickness'.

In embodiments, a thickness of the double-sidedly coated porous web (t) may measure between 15 µm and 1750 µm, preferably between 30 µm and 1000 µm, more preferably between 60 µm and 600 µm, more preferably between 65 and 150 µm. With reference to FIG 10 and FIG 11, the thickness of the double-sidedly coated porous web (i.e. the total coating thickness) in the present invention is typically defined by the slit width (w). Here, a distinction can be made between the 'wet thickness'-i.e. measured shortly below the slit, when the dope is still wet-and the 'dry thickness'-i.e. measured after fully solidifying the dope, e.g. by removing the solvent therefrom. Solidifying the dope may have a (slight) shrinking effect on the coating, so that the dry thickness may be (slightly) smaller than the wet thickness.

In preferred embodiments, the wet thickness of the double-sidedly coated porous web may be substantially equal to the slit width. This approach advantageously allows to have a very well controlled total coating thickness that is known with high accuracy. However, it is also possible to control the flow of dope through the slot such that the coated dope forms a meniscus under the slit as described in EP2296825B1 (cf. supra). Such an approach advantageously allows to have a lower total coating thickness than the slit width, however any variation in the dope flow may then negatively affect the uniformity of the coating thickness.

Although the coated dope penetrates through the porous web-so that the latter is impregnated therewith and the coating is thus present along the full total coating thickness-, it is nevertheless useful to define a coating thickness on either side of the coated porous web (t₁ and t₂) as the thickness extending beyond the porous web thickness (t_{w}), so that the total coating thickness t is equal to the sum of the t₁, t₂ and t_{w}; as e.g. shown in FIG 5. In this respect,-as defined above-the porous web typically has a first side which faces the slot and an opposite second side which faces away from the slot (i.e. facing the counter element). However, it is instructive to consider also the first and second side in view of their orientation regarding the web positioning element. More specifically, the first side faces the web positioning element in embodiments wherein the web positioning element is the upper lip; conversely, the second side faces the web positioning element in embodiments wherein the web positioning element is the spacing structure. Regardless then of the type of embodiment, by steadying the porous web against the web positioning element (i.e. aligned with the reference plane), the coating thickness on the side facing the web positioning element (i.e. t₁ or t₂) is then defined by the offset (d); said offset being with respect to the lower lip or counter element, depending on the type of embodiment (cf. supra). Any variation in the porous web thickness t_{w} is then absorbed at the side facing away from the web positioning element (cf. supra). In some embodiments, a coating thickness on the first side may therefore differ from a coating thickness on the second side. In other embodiments, the coating thickness on the first side may be substantially equal to the coating thickness on the second side. In other words, the coating thickness (t₁ or t₂) on the side facing the web positioning element may in preferred embodiments be substantially constant. For example, the coating thickness of said side may be defined by an average and a standard deviation, the standard deviation being 5% or less of the average, preferably 3% or less, more preferably between 2% or less, yet more preferably 1% or less, most preferably 0.5% or less, such as 0.2% or less. Conversely, the coating thickness (t₂ or t₁) on the side facing away from the web positioning element may absorb any variation in the porous web thickness t_{w} and thereby typically show larger variations in coating thickness (unless in the exceptional case that the porous web thickness would be substantially constant). For example, the standard deviation of the coating thickness on the side facing away from the web positioning element may be 15% or more of the average coating thickness on said side, such as 20% or more.

Like the total coating thickness and the slit width then, the wet coating thickness on the side facing the web positioning element may in preferred embodiments be substantially equal to said offset d. This approach again advantageously allows to have a very well controlled coating thickness on the web positioning element-facing side that is known with high accuracy. This side can then for example be used as the (main) separation side in an ion-permeable web-reinforced diaphragm, thereby assuring good, constant and uniform separation characteristics (e.g. bubble-point). The aforementioned notwithstanding, it is again also possible to control the flow of dope through the slot such that the coated dope forms a meniscus under the slit as described in EP2296825B1 (cf. supra). Such an approach advantageously allows to have a lower coating thickness on the web positioning element-facing side than the offset, however any variation in the dope flow may then negatively affect the uniformity of the coating on the on the web positioning element-facing side.

In embodiments, a coating thickness on the side facing the web positioning element and/or on the side facing away from the web positioning element may measure between 1 µm and 1000 µm, preferably between 2 µm and 500 µm, more preferably between 3 µm and 250 µm, yet more preferably between 4 µm and 125 µm, such as between 5 µm and 50 µm.

In embodiments, the porous web may have a pore size (dₚ)-also referred to as 'mesh opening'-measuring between 50 and 2000 µm, preferably between 100 and 1250 µm, more preferably between 150 and 1000 µm, yet more preferably between 200 and 750 µm.

In embodiments, the porous web (e.g. the filaments thereof; cf. supra) may be made of one or more materials selected from the list of: polypropylene (PP), polyolefin (PE), polyester (PET), polyamide (PA), polyethersulphone (PES), polyethylene (PE), polyoxymethylene (POM), polyetheretherketone (PEEK), polyphenylene sulfide (PPS), polymonochlorotrifluoroethylene (CTFE), copolymers of ethylene, chlorotrifluoroethylene (ECTFE), copolymers of ethylene and tetrafluoroethylene (ETFE), polytetrafluoroethylene (PTFE), and copolymers thereof. Although the porous web may most commonly consist only of filaments of the same (i.e. a single) material, it is in embodiments also possible to make a porous web comprising filaments of several materials (i.e. several different filaments but each made up of a single material, or even filaments comprising multiple materials as such).

Examples of some suitable commercial or experimental porous webs and their characteristics are listed in the following table:

| | |
|---|---|
| Sefar Peektex 17-240/62 | A PEEK mesh with a plain weaving texture based on PEEK monofilaments with a diameter of 65 µm, having a mesh opening of 240 µm, an open area of 62% and a thickness of 115 µm; supplied by Sefar AG, 9410 Heiden, Switzerland |
| Sefar Peektex 17-195/70 | A PEEK mesh with a plain weaving texture based on PEEK monofilaments with a diameter of 30 µm, having a mesh opening 195 µm, an open area of 70% and a thickness of 55 µm; supplied by Sefar AG, 9410 Heiden, Switzerland |
| PP 1044/71 (experimental) | A PP mesh with a plain weaving texture based on PP monofilaments with a diameter of 220 µm, having a mesh opening of 1044 µm, an open area of 71% and a thickness of 420 µm; custom-made |
| PVF PPS 485/58 PW | A PPS mesh with a plain weaving texture based on PPS monofilaments with a diameter of 150 µm, having a mesh opening of 485 µm, an open area of about 58 (55) % and a thickness of 318 µm; supplied by PVF Industrial Mesh, 85570 Markt-Schwaben, Germany |
| PEEK 220/62 (experimental) | A PEEK mesh with a plain weaving texture based on PEEK monofilaments, having a mesh opening of 220 µm, an open area of 62% and a thickness of 105 µm; custom-made |

In embodiments, the dope may comprises a (polymeric) binder. In embodiments, the dope may comprise a single polymer or a blend of two or more polymers. In embodiments, the one or more polymers may be homo- and/or copolymers (e.g. graft copolymers, block copolymers and/or random copolymers). In embodiments, one or more homopolymers may be independently selected from the list of: polysulfone (PSU; such as Udel^{®}), polyethersulfone (PESU), polyarylethersulfone, polyphenylsulfone (PPSU; such as Radel^{®}), polyvinylidene fluoride (PVDF), polyvinylidene chloride (PVDC), polyvinyl chloride (PVC), chlorinated polyvinyl chloride (CPVC), polyaryletherketone (PAEK), polyether ether ketone (PEEK), sulfonated polyether ether ketone (SPEEK), poly(oxa-p-phenylene-3,3-phtalido-p-phenylene-oxa-p-phenilene-oxy-phenylene) (PEEK-WC), sulfonated PEEK-WC (SPEEK-WC), polyethylene oxide (PEO), polymonochlorotrifluoroethylene (PCTFE), polyetherimide (PEI), polyimide (PI), polyamide-imide (PAI), polyacrylonitrile (PAN), polycarbonate (PC), polymethyl methacrylate (PMMA), polyurethane (PUR), polyphenylene sulphide (PPS), sulfonated PPS (SPPS or PPSS), cellulose acetate (CA), polystyrene (PS), polyvinyl alcohol (PVA), polyvinyl acetate (PVAc), a polyamide (e.g. nylon, such as nylon 6 or nylon 66), polybenzimidazole (PBI), ethylene propylene diene monomer (EPDM), silicone rubber, poly[1-(trimethylsilyl)-1-propyne] (PTMSP), poly(4-methyl-2-pentyne) (PMP) and a polymer functionalized with a quaternary ammonium group (e.g. quaternary ammonium polysulfone (QAPS)). In embodiments, one or more copolymers may be independently selected from the list of: poly(vinylidene fluoride-co-hexafluoropropylene) (PVDF-HFP) and poly(vinylidene fluoride-co-chlorotrifluoroethylene) (PVDF-CTFE). In embodiments, a polyphenylsulfone binder may for example be particularly preferred, as it enables double-sidedly coated webs to be made that have higher temperature resistance in concentrated alkaline (e.g. 30-35 wt% KOH) solutions (e.g. about 120 °C for PESU or 150 °C for PEEK, SPEEK and/or PEEK-WC; vs 110 °C for PSU). This is for instance advantageous in that lower cell potentials are required when the electrolytic temperatures is higher (with e.g. every 10 °C higher electrolytic temperature leading to about 50 mV lower cell potential).

In embodiments, the dope may comprise one or more ion-conducting polymers (e.g. cation- and/or anion-conducting polymers). Ion-conducting polymers are advantageous in that-because they conduct ions themselves-the ionic resistance of the double-sidedly coated porous web is further reduced. Examples of cation-conducting polymers are PEEK-WC, SPEEK, SPEEK-WC and SPPS. Examples of anion-conducting polymers are polymers functionalized with a quaternary ammonium group.

In embodiments, the dope may further comprises a solvent. In embodiments, the solvent may be selected from the list of: dimethyl sulfoxide (DMSO); N-ethyl-2-pyrrolidone (NEP); N-methyl-2-pyrrolidone (NMP); dimethylacetamide (DMAc); dimethylformamide (DMF); tetrahydrofuran (THF); 1,4-dioxane; triethyl phosphate (TEP); tetramethyl urea (TMU); tetra oxaundecane (TOU); cyrene; a biosolvent blend (e.g. Astrobio^{™} NS or Astrobio^{™} NS3); a dimethyl ester based solvent blend (e.g. Sta-Sol^{®} ESS I); N-butyl-pyrrolidone (e.g. TamiSolve^{™} NxG); N,N-dimethyl lactamide (e.g. Agnique^{®} AMD 3L); pentanoic acid, 5-(dimethylamino)-2-methyl-5-oxo-,methyl ester (e.g. Rhodiasolv^{®} Polarclean); and mixtures thereof. In the aforementioned list biosolvent blends (e.g. Astrobio^{™} NS or Astrobio^{™} NS3); dimethyl ester based solvent blends (e.g. Sta-Sol^{®} ESS I); N-butyl-pyrrolidone (e.g. TamiSolve^{™} NxG); N,N-dimethyl lactamide (e.g. Agnique^{®} AMD 3L); and pentanoic acid, 5-(dimethylamino)-2-methyl-5-oxo-,methyl ester (e.g. Rhodiasolv^{®} Polarclean) are typically regarded as 'green solvents' and advantageously used as such (e.g. to replace classical solvents such as NEP, NMP and DMF to make the processes more durable and sustainable).

In embodiments, the dope may comprise one or more additives. The additives may have various functions, such as aiding in forming a solution, dispersion or suspension, or imparting a certain property onto the dope or the eventual coating. The latter may for example entail increasing the coating's hydrophilicity (as e.g. achieved by a ZrO₂ filler) and/or total porosity (e.g. by using a pore-forming agent, such as one of the organic additives listed below). In embodiments, each additive may independently be a filler (i.e. an additive intended to stay in the coating after solidification) or a temporary agent (i.e. an additive which not intended to stay in the coating after solidification). A filler thus typically fulfils a function in the solidified coating (e.g. modifying its hydrophilicity), while a temporary agent's role rather lies before or during formation of the coating (e.g. as pore forming and/or rheology-modifying agent). In embodiments, the additives may be organic and/or inorganic in nature. In embodiments, one or more organic additives may be selected from the list of: hydroxypropyl cellulose (HPC), carboxymethylcellulose (CMC), polyvinylpyrrolidone (PVP), polyethylene glycol (PEG), ethanolamine (MEA), diethanolamine (DEA), polyethylene oxide (PEO), glycerol, glycol or water. In embodiments, one or more inorganic additives (e.g. (fine) granular inorganic fillers) may be selected from the list of: oxides (e.g. MgO, TiO₂, HfO₂, Al₂O₃, ZrO₂, CeO₂, Y₂O₃, SiO₂ or MgO) or their hydroxy-oxide derivatives, zeolites, Zr₃(PO₄)₄, BaSO₄, BaTiO₄, SiC, metal-organic frameworks (MOF), molecular sieves, ion-exchangers and metal hydrides. The additives can be used in a variety of shapes; e.g. as a powder, whiskers, fibres, chopped fibres, etc.

In embodiments, the polymer(s) and/or additive(s) may be functionalized. For example, they may be aminated, sulfonated, acrylated or functionalized with a quaternary ammonium group.

In preferred embodiments, the dope may comprise a polyphenylsulfone binder, a ZrO₂ filler, and a pore-forming agent. Such a dope advantageously allows (cf. supra) to make double-sidedly coated webs (e.g. ion-permeable web-reinforced diaphragms) with high total porosity, high temperature resistance and good hydrophilicity, yielding favourable properties such as a very low ionic resistance and enabling in a very low cell potential at high current density.

In embodiments, the dope at the impregnation temperature may have a viscosity at a shear rate of 1 s⁻¹ of from 1 to 500 mPa.s, preferably from 5 to 300 mPa.s, more preferably from 10 to 200 mPa.s, yet more preferably from 15 to 100 mPa.s.

In embodiments, the method may comprise a further step c-after step b of providing the dope into the slit, thereby double-sidedly coating the porous web-of solidifying the dope. In embodiments, solidifying the dope may be performed by phase inversion (which may also be referred to as 'phase separation'). In embodiments, the phase inversion may be achieved by contacting the dope with a non-solvent-such as (warm) water (e.g. about 50 °C); for example by passing it through a non-solvent precipitation bath-or by any other known means of achieving phase inversion. In preferred embodiments, the phase inversion may be achieved by passing the dope through a non-solvent precipitation bath, without first contacting the dope-or by selectively contacting only the dope on one side of the porous web and not the other-with a non-solvent (e.g. water) vapour phase. In other embodiments, the phase inversion may comprise contacting the dope with a non-solvent (e.g. water) vapour phase. Use of a non-solvent vapour phase (as e.g. described in EP1776490B1) typically makes for a more involved and complicated phase inversion, while this is typically not needed within the present invention.

In embodiments, the non-solvent may be comprised in a mixture with a solvent. In embodiments, contacting the dope with a non-solvent may comprise contacting the dope with different concentrations of the non-solvent. For example, the dope may initially be contacted with a low concentration of the non-solvent and the concentration may increase as the solidification progresses. Contacting the dope with different concentrations of the non-solvent may for instance comprise contacting the dope with several different mixtures comprising the solvent (e.g. by passing it through several non-solvent precipitation baths with different non-solvent concentrations) or by contacting the dope with a concentration gradient of the non-solvent (e.g. by passing it through a non-solvent precipitation bath with said concentration gradient or by exposing it to a non-solvent vapour phase with said concentration gradient). This is advantageous as it allows a high degree of control over the pores which are being formed, thereby e.g. enabling well-controlled size of the pores being formed. Moreover, it allows to form a sponge-like shaped pore structure with fine pore sizes at one side (e.g. the 'secured' side) and a supporting pore structure with gradually opening pore size towards the other side, and this throughout the porous web.

Preferably, step c may be performed relatively quickly after step b, such that the dope is quickly solidified after being coated on the porous web and thereby limiting flow of the dope with respect to the porous web after being coated thereon. The specifics thereof will typically depend on the transportation speed of the porous web, but a height distance between a bottom of the slit and a top of the non-solvent in the precipitation bath (i.e. the 'air-gap') may for example be equal to 25 cm or less, preferably 10 cm or less, more preferably 5 cm or less, yet more preferably 2 cm or less, or even 0 cm. In principle, after step b (i.e. after being coated with the dope) and before step c (i.e. before solidifying said dope) the porous web can still move/displace in the wet dope layer. As such, the double-sidedly coated porous web may be passed from the slit into the non-solvent precipitation bath substantially vertically downward. As with the vertical orientation in the slit, this can for example be realized through accordingly configuring the web positioning element with respect to a lowerly positioned guiding element placed in the non-solvent precipitation bath (e.g. as shown in FIG 7 for web positioning element 51 and roller 82; cf. supra). By keeping the coated porous web vertical until the dope is solidified, it can advantageously be avoided that the dope is (gravitationally) drawn to one of the sides. Notwithstanding, note that this drawing of the dope to one side tends to be more of an issue when the dope/porous web is freestanding (i.e. not supported by e.g. a roll as in FIG 9). Accordingly, the orientation of the slit and of the passage of the double-sidedly coated porous web may in embodiments also deviate from being substantially vertically downward (as e.g. depicted in FIG 9).

In embodiments, the method may be implemented as a roll-to-roll (which may also be referred to as a 'coil-to-coil') process. In embodiments, the roll-to-roll process may be a continuous or semi-continuous process.

In embodiments, the method may be for manufacturing an ion-permeable web-reinforced diaphragm. In embodiments, the ion-permeable web-reinforced diaphragm may be for use in intensified electrochemical cells (e.g. alkaline water electrolysis or Li-ion battery). The electrochemical cell may for example comprise an operational window in the range of from 0.6 to 5 A/cm², such as from 0.6 to 2.5 A/cm². As also noted in the background section, different electrochemical process regimes can be distinguished based on current density: 'classical' (up to 0.2 A/cm²), 'advanced' (0.2 up to 0.6 A/cm²) and 'intensified' (0.6 A/cm² and above, e.g. 0.6-5 A/cm²). Although double-sidedly coated porous webs in accordance with the present invention can be used for any of these current densities regimes-and indeed for other altogether applications-they are especially advantageous use in intensified electrochemical cell, where good alternatives are currently lacking.

In embodiments, any feature of any embodiment of the second aspect may independently be as correspondingly described for any embodiment of any of the other aspects.

In a third aspect, the present invention relates to a use of a web positioning element in a coating apparatus according to any embodiment of the first aspect for steadying a porous web thereagainst.

In embodiments, any feature of any embodiment of the third aspect may independently be as correspondingly described for any embodiment of any of the other aspects.

In a fourth aspect, the present invention relates to a double-sidedly coated porous web obtainable by the method according to any embodiment of the second aspect.

In embodiments, any feature of any embodiment of the fourth aspect may independently be as correspondingly described for any embodiment of any of the other aspects.

In a fifth aspect, the present invention relates to a double-sidedly coated porous web, having on one side a coating thickness defined by an average and a standard deviation, the standard deviation being 10 µm or less, preferably 5 µm or less, yet more preferably 2.5 µm or less.

Since the coating thickness on one side of the porous web is in accordance with the present invention substantially ensured-while any thickness variation of the porous web is absorbed at the other side-the coating thickness on the one side is typically substantially more constant and more independent of both the thickness of the porous web as such (t_{w}) and the coating thickness (t₁ or t₂; and/or t) than is the case in the prior art.

In embodiments, the standard deviation may be 10% or less of the average, preferably 5% or less, more preferably between 3% or less, yet more preferably 2% or less, most preferably 1% or less.

Alternatively to what is stated for the fifth aspect, the standard deviation may be the highest of (i) 10 µm or less, preferably 5 µm or less, yet more preferably 2.5 µm or less; and (ii) 10% or less of the average, preferably 5% or less, more preferably between 3% or less, yet more preferably 2% or less, most preferably 1% or less. Notwithstanding the above, it may in embodiments be that the coating thickness (t₁ or t₂; and/or t) starts to play a significant role in the achievable constancy of the coating thickness on the one side (t₁ or t₂). It may then be more opportune to express the standard deviation as a percentage of the average (option ii), but with an intrinsic lower limit set by the method and/or coating apparatus (option i).

In embodiments, the double-sidedly coated porous web may have a first average pore size on one side and a second average pore size on the opposing side. In embodiments, the first average pore size may be smaller than the second average pore size. In embodiments, the first average pore size may be at least 2 times smaller than the second average pore size, preferably at least 3 times smaller, more preferably at least 5 times smaller, yet more preferably at least 10 times smaller. In preferred embodiments, the smaller pore size may be at the side having the low standard deviation coating thickness as defined above.

In embodiments wherein the coating also comprises a (fine) granular filler, the second average pore size (i.e. the pore size of the large pores) may nevertheless preferably be smaller than the D50 of the granular filler, more preferably smaller than the D30, yet more preferably smaller than the D20, still yet more preferably smaller than the D10, most preferably smaller than the D5. Herein, the D50 is the particle size of the 50^{th} percentile of the granular filler, so that 50% of the granular filler particles are smaller and 50% are larger; D30 is the particle size of the 30^{th} percentile, so that 30% is smaller and 70% is larger; etc. By contrast, in the prior art the pores at both outer sides of the porous web are typically fairly large compared to the granular filler's particle size (e.g. with an hourglass-shaped pore structure, having smaller sizes in the middle of the coated porous web but increasing in size towards both outer sides). This is done to achieve a reasonable ionic resistance, but also explains why the granular filler so easily drops out of the coating over time (cf. background). Instead, it is therefore advantageous to account for the size of the granular filler by selecting a second average pore size which is sufficiently small, so that the granular fillers are well retained in the coating. Moreover, note that this degree of freedom is made accessible by the present invention, because large pores are herein not needed to achieve a low ionic resistance.

In embodiments, the double-sidedly coated porous web of the fifth aspect may for example be obtainable by the method according to an embodiment of the second aspect (cf. the fourth aspect).

In embodiments, any feature of any embodiment of the fifth aspect may independently be as correspondingly described for any embodiment of any of the other aspects.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Examples

To validate that a considerable improvement with respect to the prior art can indeed be realized, ion-permeable web-reinforced diaphragm were manufactured by coating three different types of porous web with a dope (comprising polysulfone binder and a ZrO₂ filler) in accordance with the present invention (example 1-3) and benchmarked with a commercial Zirfon^{™} PERL (UTP 500) ion-permeable web-reinforced diaphragm in accordance with EP1776490B1 (comparative example). With respect to the comparative example, Example 1 started from a thicker porous web (420 µm vs 320 µm)-but having a considerably larger open area (71% vs 55%)-and was coated such as to realize a similar diaphragm thickness (i.e. 'dry thickness') as the comparative example (510 µm vs 525 µm). Example 2 used a porous web with a considerably lower thickness (115 µm) but smaller open area (62%; i.e. closer to that of the comparative example) to realize a diaphragm thickness that is more than four times smaller (123 µm). Example 3 used an even thinner porous web (55 µm) with again a high open area (70%) to realize the thinnest diaphragm thickness (69 µm) of these examples.

Additionally, a further batch of ion-permeable web-reinforced diaphragm was manufactured (example 4) by coating polyetheretherketone (PEEK) porous webs with a dope comprising a polyphenylsulfone (PPSU) binder, ZrO₂ filler and a pore-forming agent.

For each of the examples, the ionic resistance was measured in a 30 wt% aqueous KOH solution at 30 °C. Both the absolute and relative (with respect to the benchmark comparative example) ionic resistance values were determined. The results are summarized in the table below.

| Example | Porous web | | | Realised diaphragm | | |
|---|---|---|---|---|---|---|
| | Type | Thickness (µm) | Open area (%) | Thickness (µm) | Ionic resistance | |
| | | | | | (Ω.cm²) | (%) |
| comparative | PVF PPS 485/58 PW | 320 | 55 | 525 | 0.151 | 100 |
| 1 | Experimental PP 1044/71 | 420 | 71 | 510 | 0.105 | 69.5 |
| 2 | SEFAR PEEKTEX 17-240/62 | 115 | 62 | 123 | 0.029 | 19.2 |
| 3 | SEFAR PEEKTEX 17-195/70 | 55 | 70 | 69 | 0.015 | 9.9 |
| 4 | Experimental PEEK 220/62 | 105 | 62 | 170 | 0.034 | 22.5 |

Thus, although example 1 started from a thicker porous web, the ionic resistance was more than 30% lower than for the comparative example. Moreover, example 2 and 3 yielded an ionic resistance that was from more than 5 times to up to about 10 times lower than the benchmark. Such a reduced ionic resistance is beneficial because it drastically reduces the voltage drop across the diaphragm and improves the overall efficiency while reducing the associated resistive heating. For example 4, the porous web had the same open area as that of example 2, but the realized diaphragm was considerably thicker. Nevertheless a largely comparable ionic resistance was achieved, thanks to the effect of the pore-forming agent on the total porosity of the coated porous web.

Note that the comparative example could also be repeated using the apparatus and method in accordance with the present invention. For an equal diaphragm thickness, a same or moderately lower ionic resistance can be expected. After all, such relatively thick and low open area porous webs are themselves typically sufficiently stiff to resist excessive warping between the slot-die coating heads. The relative advantage from the present invention is therefore lower. However, repeating examples 1-4 using the approach of EP1776490B1 does not allow to make comparable diaphragms (i.e. reaching the same low ionic resistance).

Following a similar procedure as for examples 1-3, an ion-permeable web-reinforced diaphragm for e.g. a Li-ion battery can for instance be fabricated by coating a thin (e.g. 15-20 µm) polyester or polypropylene porous web with a dope comprising a PVDF binder and a ZrO₂ or an Al₂O₃ filler.

It is to be understood that although preferred embodiments, specific constructions, configurations and materials have been discussed herein in order to illustrate the present invention. It will be apparent to those skilled in the art that various changes or modifications in form and detail may be made without departing from the scope of the invention as defined in the appended claims.

## Claims

1. A coating apparatus (41, 42) for double-sidedly coating a porous web (10) with a dope (30), comprising:
i. a slot-die coating head (50) comprising
- an upper lip (51),
- a lower lip (52) and
- a slot (53) between the upper lip (51) and the lower lip (52),
ii. a counter element (60) arranged opposite the lower lip (52) across a reference plane (15) with the proviso that the counter element is not for supplying dope,
iii. a slit (70) defined between the lower lip (52) and the counter element (60) for passing a porous web (10) downward therebetween, the slot (53) opening up towards the slit (70), and
iv. a web positioning element (51, 61) for steadying the porous web (10) thereagainst, so that the position of the side of the porous web (10) facing the web positioning element (51, 61) is at the height of the web positioning element (51, 61) aligned with the reference plane (15);
wherein the web positioning element (51, 61) is
- the upper lip (51) of the slot-die coating head (50), the upper lip (51) protruding up to the reference plane (15) so that there is an offset (d) between the upper lip (51) and the lower lip (52), or
- a spacing structure (61) on the counter element (60), the spacing structure (61) protruding up to the reference plane (15) so that there is an offset (d) between the spacing structure (61) and the counter element (60).

2. The coating apparatus (41, 42) according to claim 1, wherein the counter element is a doctor blade or a roller.

3. A method for double-sidedly coating a porous web (10) with a dope (30) using a coating apparatus (41, 42) as defined in claim 1 or 2, comprising:
a. passing a porous web (10) downward through the slit (70) while steadying said porous web (10) against the web positioning element (51, 61), and
b. providing the dope (30) through the slot (53) of the slot-die coating head (50) into the slit (70), thereby
- coating a first side of the porous web (10) facing the slot (53), and
- coating an opposite second side of the porous web (10) through said porous web (10).

4. The method according to claim 3, wherein steadying the porous web (10) against the web positioning element (51, 61) comprises drawing the porous web (10) against the web positioning element (51, 61).

5. The method according to claim 3 or 4, wherein the porous web (10) comes into contact with the web positioning element (51, 61) along an incidence plane (16) and wherein the incidence plane (16) is-with respect to the reference plane (15)-tilted towards the web positioning element (51, 61).

6. The method according to claim 5, wherein the incidence plane (16) is tilted at an angle (α) of at least 15°, preferably at least 20°, more preferably at least 25°.

7. The method according to any of claims 3 to 6, wherein the porous web (10) is passed through the slit (70) substantially vertically downward.

8. The method according to any of claims 3 to 7, wherein the porous web (10) has an open area of between 55 and 95%, preferably more than 70%.

9. The method according to any of claims 3 to 8, wherein a coating thickness on the first side (t₁) differs from a coating thickness on the second side (t₂).

10. The method according to any of claims 3 to 9, for manufacturing an ion-permeable web-reinforced diaphragm for use in intensified electrochemical cells.

11. Use of a web positioning element (51, 61) in a coating apparatus (41, 42) as defined in claim 1 or 2 for steadying a porous web (10) thereagainst.

## Patentansprüche

1. Eine Beschichtungseinrichtung (41, 42) zur doppelseitigen Beschichtung einer porösen Bahn (10) mit einer Spinnlösung (30), umfassend:
i. einen Schlitzmatrizenbeschichtungskopf (50), umfassend
- eine obere Lippe (51),
- eine untere Lippe (52) und
- eine Nut (53) zwischen der oberen Lippe (51) und der unteren Lippe (52),
ii. ein Gegenelement (60), das entgegengesetzt zu der unteren Lippe (52) über eine Referenzebene (15) angeordnet ist, unter der Bedingung, dass das Gegenelement nicht zur Zufuhr von Spinnlösung dient,
iii. einen Schlitz (70), der zwischen der unteren Lippe (52) und dem Gegenelement (60) definiert ist, um eine poröse Bahn (10) dazwischen nach unten durchzuführen, wobei sich die Nut (53) nach oben hin zu dem Schlitz (70) öffnet, und
iv. ein Bahnpositionierungselement (51, 61) zum Stabilisieren der porösen Bahn (10) dagegen, sodass die Position der Seite der porösen Bahn (10), die zu dem Bahnpositionierungselement (51, 61) weist, auf der Höhe des Bahnpositionierungselements (51, 61) mit der Referenzebene (15) ausgerichtet ist;
wobei das Bahnpositionierungselement (51, 61) Folgendes ist
- die obere Lippe (51) des Nutzmatrizenbeschichtungskopfs (50), wobei die obere Lippe (51) zu der Referenzebene (15) vorsteht, sodass es einen Versatz (d) zwischen der oberen Lippe (51) und der unteren Lippe (52) gibt, oder
- eine Beabstandungsstruktur (61) auf dem Gegenelement (60), wobei die Beabstandungsstruktur (61) zu der Referenzebene (15) nach oben vorsteht, sodass es einen Versatz (d) zwischen der Beabstandungsstruktur (61) und dem Gegenelement (60) gibt.

2. Die Beschichtungseinrichtung (41, 42) nach Anspruch 1, wobei das Gegenelement eine Rakel oder eine Walze ist.

3. Ein Verfahren zur doppelseitigen Beschichtung einer porösen Bahn (10) mit einer Spinnlösung (30) unter Verwendung einer Beschichtungseinrichtung (41, 42), wie sie in Anspruch 1 oder 2 definiert ist, umfassend:
a. Durchführen einer porösen Bahn (10) nach unten durch den Schlitz (70), während die poröse Bahn (10) gegen das Bahnpositionierungselement (51, 61) stabilisiert wird, und
b. Bereitstellen der Spinnlösung (30) durch den Schlitz (53) des Nutmatrizenbeschichtungskopfs (50) in den Schlitz (70), dadurch
- Beschichten einer ersten Seite der porösen Bahn (10), die zu der Nut (53) weist, und
- Beschichten einer entgegengesetzten zweiten Seite der porösen Bahn (10) durch die poröse Bahn (10) hindurch.

4. Das Verfahren nach Anspruch 3, wobei Stabilisieren der porösen Bahn (10) gegen das Bahnpositionierungselement (51, 61) Ziehen der porösen Bahn (10) gegen das Bahnpositionierungselement (51, 61) umfasst.

5. Das Verfahren nach Anspruch 3 oder **4,** wobei die poröse Bahn (10) mit dem Bahnpositionierungselement (51, 61) entlang einer Einfallsebene (16) in Kontakt kommt und wobei die Einfallsebene (16) - in Bezug auf die Referenzebene (15) - hin zu dem Bahnpositionierungselement (51, 61) geneigt ist.

6. Das Verfahren nach Anspruch 5, wobei die Einfallsebene (16) bei einem Winkel (α) von mindestens 15°, vorzugsweise mindestens 20°, bevorzugter mindestens 25° geneigt ist.

7. Das Verfahren nach einem der Ansprüche 3 bis 6, wobei die poröse Bahn (10) durch den Schlitz (70) im Wesentlichen vertikal nach unten durchgeführt wird.

8. Das Verfahren nach einem der Ansprüche 3 bis 7, wobei die poröse Bahn (10) eine offene Fläche zwischen 55 und 95%, vorzugsweise mehr als 70% aufweist.

9. Das Verfahren nach einem der Ansprüche 3 bis 8, wobei sich eine Beschichtungsdicke auf der ersten Seite (t₁) von einer Beschichtungsdicke auf der zweiten Seite (t₂) unterscheidet.

10. Das Verfahren nach einem der Ansprüche 3 bis 9 zum Herstellen einer ionendurchlässigen bahnverstärkten Membran zur Verwendung in verstärkten elektrochemischen Zellen.

11. Verwendung eines Bahnpositionierungselements (51, 61) in einer Beschichtungseinrichtung (41, 42), wie sie in Anspruch 1 oder 2 definiert ist, zum Stabilisieren einer porösen Bahn (10) dagegen.

## Revendications

1. Un appareil de revêtement (41, 42) pour revêtir en double face une bande poreuse (10) avec une solution (30), comprenant :
i. une tête de revêtement à fente (50) comprenant
□ une lèvre supérieure (51),
□ une lèvre inférieure (52) et
□ une fente (53) entre la lèvre supérieure (51) et la lèvre inférieure (52),
ii. un élément de contrepartie (60) disposé en face de la lèvre inférieure (52) à travers un plan de référence (15) sous réserve que ledit élément de contrepartie ne soit pas destiné à fournir la solution,
iii. une lumière (70) définie entre la lèvre inférieure (52) et l'élément de contrepartie (60) pour faire passer une bande poreuse (10) vers le bas entre eux, la fente (53) s'ouvrant vers la lumière (70), et
iv. un élément de positionnement de la bande (51, 61) pour stabiliser la bande poreuse (10) contre celui-ci, de sorte que la position du côté de la bande poreuse (10) faisant face à l'élément de positionnement de la bande (51, 61) soit à la hauteur de l'élément de positionnement de la bande (51, 61) alignée avec le plan de référence (15) ;
dans lequel l'élément de positionnement de la bande (51, 61) est
□ la lèvre supérieure (51) de la tête de revêtement à fente (50), la lèvre supérieure (51) dépassant jusqu'au plan de référence (15) de sorte qu'il y ait un décalage (d) entre la lèvre supérieure (51) et la lèvre inférieure (52), ou
□ une structure d'espacement (61) sur l'élément de contrepartie (60), la structure d'espacement (61) dépassant jusqu'au plan de référence (15) de sorte qu'il y ait un décalage (d) entre la structure d'espacement (61) et l'élément de contrepartie (60).

2. L'appareil de revêtement (41, 42) selon la revendication 1, dans lequel ledit élément de contrepartie est une lame de docteur ou un rouleau.

3. Un procédé pour revêtir en double face une bande poreuse (10) avec une solution (30) en utilisant un appareil de revêtement (41, 42) tel que défini dans la revendication 1 ou 2, comprenant :
a. faire passer une bande poreuse (10) vers le bas à travers la lumière (70) tout en stabilisant ladite bande poreuse (10) contre l'élément de positionnement de la bande (51, 61), et
b. fournir la solution (30) à travers la fente (53) de la tête de revêtement à fente (50) dans la lumière (70), de ce fait
□ revêtir un premier côté de la bande poreuse (10) faisant face à la fente (53), et
□ revêtir un deuxième côté opposé de la bande poreuse (10) à travers ladite bande poreuse (10).

4. Le procédé selon la revendication 3, dans lequel stabiliser la bande poreuse (10) contre l'élément de positionnement de la bande (51, 61) comprend tirer la bande poreuse (10) contre l'élément de positionnement de la bande (51, 61).

5. Le procédé selon la revendication 3 ou 4, dans lequel la bande poreuse (10) entre en contact avec l'élément de positionnement de la bande (51, 61) le long d'un plan d'incidence (16) et dans lequel le plan d'incidence (16) est-par rapport au plan de référence (15)-incliné vers l'élément de positionnement de la bande (51, 61).

6. Le procédé selon la revendication 5, dans lequel le plan d'incidence (16) est incliné à un angle (α) d'au moins 15°, de préférence au moins 20°, plus préférablement au moins 25°.

7. Le procédé selon l'une quelconque des revendications 3 à 6, dans lequel la bande poreuse (10) est passée à travers la lumière (70) sensiblement verticalement vers le bas.

8. Le procédé selon l'une quelconque des revendications 3 à 7, dans lequel la bande poreuse (10) a une zone ouverte comprise entre 55 et 95%, de préférence plus de 70%.

9. Le procédé selon l'une quelconque des revendications 3 à 8, dans lequel une épaisseur de revêtement sur le premier côté (t₁) diffère d'une épaisseur de revêtement sur le deuxième côté (t₂).

10. Le procédé selon l'une quelconque des revendications 3 à 9, pour la fabrication d'un diaphragme renforcé par une bande ioniquement perméable pour une utilisation dans des cellules électrochimiques intensifiées.

11. Utilisation d'un élément de positionnement de la bande (51, 61) dans un appareil de revêtement (41, 42) tel que défini dans les revendications 1 ou 2 pour stabiliser une bande poreuse (10) contre celui-ci.
